(19) Europäisches Patentamt
European Patent Office
Office européen des brevets

(11) EP 2 680 486 A1

(12) EUROPEAN PATENT APPLICATION

(43) Date of publication:
01.01.2014 Bulletin 2014/01

(51) Int Cl.:
H04L 9/08 (2006.01)          H04L 9/30 (2006.01)

(21) Application number: 12305788.7

(22) Date of filing: 29.06.2012

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

• Ahmed, Tansir
  IG2 7PL Ilford (GB)
• Chazalet, Boris
  W12 7HQ London (GB)
• Devigne, Julien
  14000 Caen (FR)

(71) Applicant: Orange
75015 Paris (FR)

(74) Representative: Cabinet Plasseraud
52, rue de la Victoire
75440 Paris Cedex 09 (FR)

(72) Inventors:
• Canard, Sébastien
  14000 Caen (FR)

(54) **Key management**

(57) The application relates in particular to a system comprising electronic devices connectable to a network. Said electronic devices are associated with respective key pairs. Each key pair comprises a private key and a related public key. The system is adapted to cipher data with a public key of a key pair of an electronic device of the system, to store thus ciphered data in the network and to share said ciphered data through the network with an electronic device of the system. The set of key pairs associated with said electronic devices of the system is partitioned into at least two subsets such that for each subset having more than one key pair there is a mutual trust between all key pairs of such subset. The system is arranged to define, for each key pair of each such subset, a bidirectional transition key between said key pair and another key pair of such subset. The system is further arranged to define a unidirectional transition key between a key pair of a subset and a key pair of another subset.

The application also relates to a corresponding method, computer program, and storage device.

FIG. 1

**Description**

The invention relates to cryptographic systems operating networks such as clouds. Cloud computing consists in using remote servers to store or process data traditionally located on local servers or on personal computers. Such remote servers are a main component of a cloud. Accessing services hosted in a cloud typically takes place through a standard application such as a web browser.

Cloud users are no longer in charge of their servers, which simplifies their work as they don't have to manage an often complex and expensive dedicated infrastructure, which is replaced by a shared infrastructure managed by a third party. However, applications and data not being under direct control of users anymore (e.g. in a local computer or in a server supervised par the user), they are potentially accessible to third parties (cloud administrators for example). This may cause major confidentiality issues.

In particular, a user may want to use a cloud for storing personal or confidential data. In order to ensure privacy or confidentiality, several systems have been proposed in order to allow a cloud (or more generally an entity such as a remote server) to store data in ciphered form such that the cloud is unable to decipher the ciphered data it stores. However, it is sometimes desired to share stored ciphered data with other parties (list of authorized users). A user having a key pair in a PKI (Public Key Infrastructure) may store his own data, ciphered with his public key, but may also want to allow certain persons (for example family members) to access to certain stored data (for example family pictures), without having to disclose his private key (which may be used to decipher any data he ciphered with his public key, which could include medical files or fiscal matters for example).

To this end, it is known to use an entity called a proxy (which may be hosted in the cloud) which both stores users' encrypted data and allows access to such data by authorized users, in such a way that the proxy is not able to obtain any information about the stored data. This is described for example in « Improved Proxy Re-encryption Schemes with Applications to Secure Distributed Storage », Giuseppe Ateniese (The Johns Hopkins University) Kevin Fu (University of Massachusetts, Amherst), Matthew Green (The Johns Hopkins University) and Susan Hohenberger (Massachusetts Institute of Technology), published in ACM Transactions on Information and System Security, volume 9, number 1, February 2006, pages 1-30.

In such systems, the cloud manages several distinct accounts. It is possible to register several devices with each account. Each time a device is registered with a given account, a transition key KT (a.k.a re-encryption key) is generated for each possible pair of devices that are registered with this account. For example, if an account A comprises two devices '2' and '3', and if a third device '1' is registered with the account, two transition keys are created, KT12 from '1' to '2' and KT13 from '1' to '3'. When device '1' wants to store data in the cloud and share such data with all members of account A, '1' may encrypt such data with its public key PK1 and store the result in the cloud. Device '1' can later retrieve such ciphered data for its own use and decrypt it with its private key SK1 (corresponding to PK1). If device '2' or '3' wants to access such data, the proxy may use the transition key from device '1' to the device in question (KT12 for device '2' and KT13 for device '3') in order to translate such data (ciphered by PK1) into data decipherable by SK2 (or SK3 respectively).

An Ateniese-Fu-Green-Hohenberger system enables the use of a single encryption key, each transition key being computed from the corresponding private key of the applicable target device, processed by a one way function (the private key should not be recoverable from a transition key).

A Tysowski-Anwarul system adapts the previous system (described for servers in general) to a context comprising cloud storage.

There are different kinds of proxy re-encryption schemes. A proxy re-encryption scheme (as well as a proxy re-encryption key) is said to be bidirectional if the proxy can translate encrypted data from one device (e.g. device '1') to another device (e.g. device '2') and vice versa with the same re-encryption key (either KT12 = KT21, or there is a public relation between KT12 and KT21 such that one is easily derived from the other). Such a proxy re-encryption scheme requires a mutual trust between devices. This may be problematic as device '1' may trust device '2' without device '2' trusting device '1'.

A proxy re-encryption scheme (as well as a proxy re-encryption key) is said to be unidirectional if the proxy requires different re-encryption keys to translate encrypted data from one device (e.g. device '1') to another device (e.g. device '2') and to translate encrypted data from the other device ('2') to the first device ('1'), i.e. KT12 is different from KT21, in the sense not only that KT12 is not strictly equal to KT21, but also that there is no feasible (public) way to compute KT12 from KT21, or to compute KT21 from KT12.

A proxy re-encryption scheme is said to be single-hop if it is only possible to re-encrypt once, and is said to be multi-hop if it is possible to re-encrypt several times (which may be advantageous).

Known unidirectional proxy re-encryption schemes are single-hop. Known bidirectional proxy re-encryption schemes are multi-hop (with a few exceptions that are not considered relevant in the present context). Therefore, those skilled in the art currently have to either use a bidirectional scheme which poses problems (such as privacy or confidentiality issues due to a forced mutual trust which in fact should have been a one-way trust), or to use a unidirectional scheme, which also poses problems (due in particular to the fact that it is not possible to re-encrypt already re-encrypted data).

It is recalled that a secret key, a.k.a symmetric key (used in a symmetric cryptosystems) is a key that is used both for encryption and decryption, wherein sharing data ciphered with a secret key typically requires sharing the secret key (so that the ciphered data be decipherable). A key pair (used in asymmetric cryptosystems) comprises a private key typically assigned to a single entity and not shared, and a corresponding public key, which can be shared. When there is no ambiguity, the expressions "secret key" and "private key" are sometimes used interchangeably.

It is an aim of the invention to improve the situation.

The invention relates to a system comprising electronic devices connectable to a network, said electronic devices being associated with respective key pairs,

each key pair comprising a private key and a related public key,

the system being adapted to cipher data with a public key of a key pair of an electronic device of the system, to store thus ciphered data in the network and to share said ciphered data through the network with an electronic device of the system,

the set of key pairs associated with said electronic devices of the system being partitioned into at least two subsets such that for each subset having more than one key pair there is a mutual trust between all key pairs of such set,

the system being arranged to define, for each key pair of each such subset, a bidirectional transition key between said key pair and another key pair of such subset,

the system being further arranged to define a unidirectional transition key between a key pair of a subset and a key pair of another subset.

This system is advantageous in particular in that it does not force a mutual trust between all key pairs (full mutual trust not necessarily being the norm in practice) and at the same time it enables a multi-hop scheme between all key pairs that mutually trust each other (enabling in particular an easier addition/deletion of key pairs).

The invention also relates to a method for securing a system comprising electronic devices connectable to a network, wherein said electronic devices are associated with respective key pairs,

each key pair comprising a private key and a related public key,

the system being adapted to cipher data with a public key of a key pair of an electronic device of the system, to store thus ciphered data in the network and to share said ciphered data through the network with an electronic device of the system, the method comprising:

/a/ defining a partition of the set of key pairs associated with said electronic devices of the system into at least two subsets such that, for each subset having more than one key pair, there be a mutual trust between all key pairs of such subset;

/b/ defining for each key pair of each such subset a bidirectional transition key between said key pair and another key pair of such subset;

/c/ defining a unidirectional transition key between a key pair of a subset and a key pair of another subset.

This method is advantageous in particular in that it does not force a mutual trust between all key pairs (full mutual trust not necessarily being the norm in practice) and at the same time it enables a multi-hop scheme between all key pairs that mutually trust each other (enabling in particular an easier addition/deletion of key pairs).

Other aspects and advantages of the invention will become readily apparent in the following description of certain embodiments.

The invention will also be better understood by referring to the drawings, in which:

- Figure 1 shows a system according to a possible embodiment ;
- Figure 2 shows a recovery of encrypted data in a system according to Figure 1 ;
- Figure 3 illustrates the loss of a device in a system according to Figure 1 ;
- Figure 4 illustrates the loss of another device in a system according to Figure 1 ;
- Figure 5 illustrates a system with multiple proxies ;
- Figure 6 illustrates the loss of a device in a system according to Figure 5.

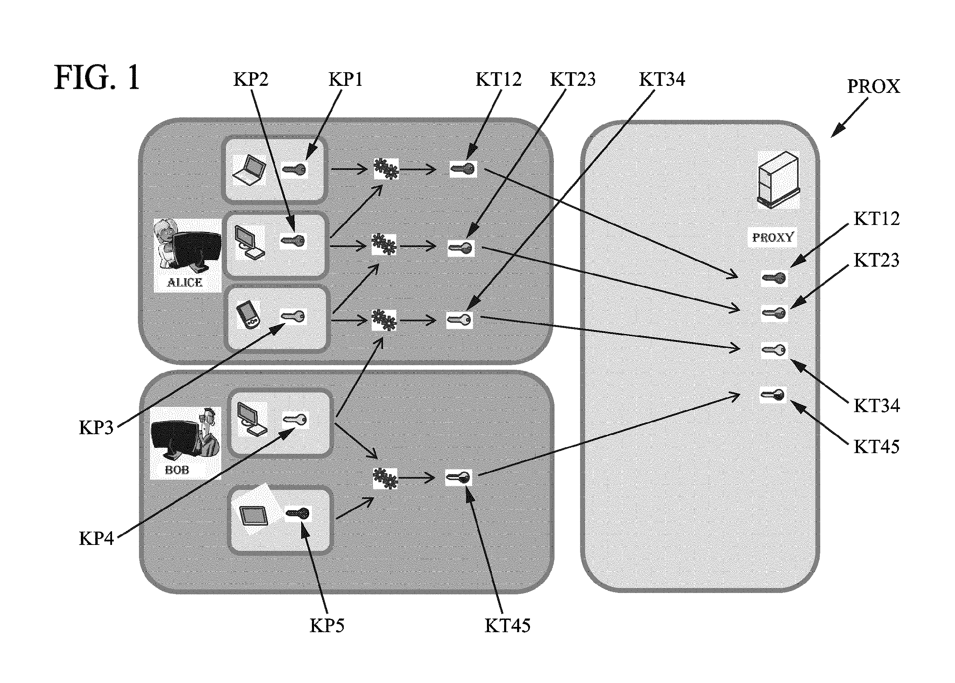

Figure 1 shows a system in which a first user (Alice) has three devices (laptop computer, desktop computer and PDA) respectively storing a key pair KP1, KP2 and KP3 (the three of which constitute a first subset of key pairs). A second user (Bob) has two devices (desktop computer and tablet computer) respectively storing a key pair KP4 and KP5 (the two of which constitute a second subset of key pairs). Alice and Bob's five devices are connected to a proxy PROX storing multi-hop bidirectional transition keys KT12 (between KP1 and KP2) and KT23 (between KP2 and KP3) for Alice, and multi-hop bidirectional transition key KT45 (between KP4 and KP5) for Bob. The proxy PROX also stores a single-hop unidirectional transition key KT34 (from KP3 to KP4).

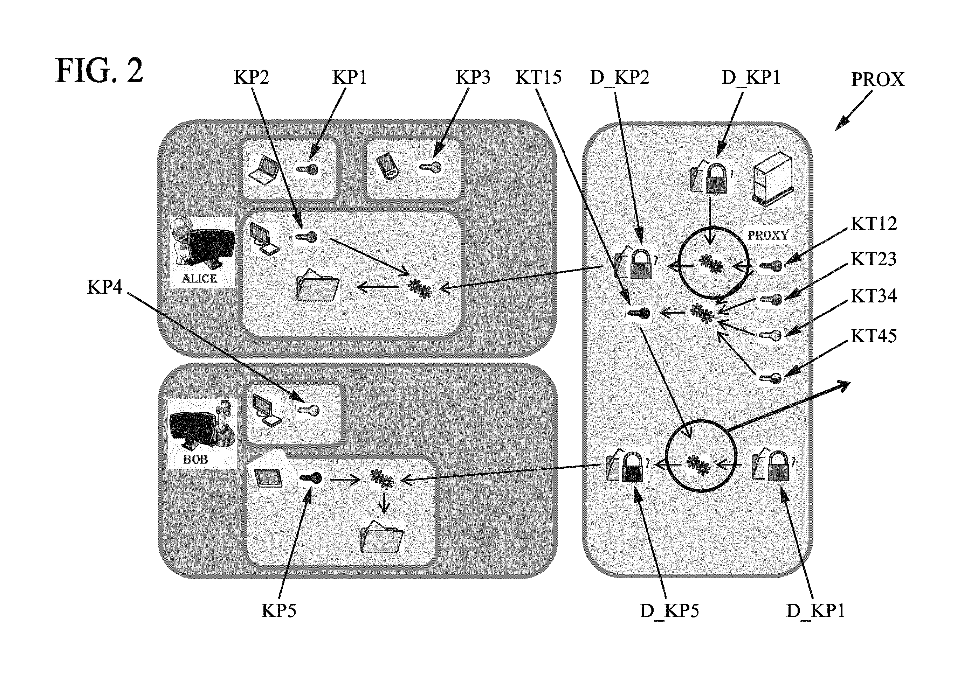

Figure 2 shows how, in a system according to Figure 1, a document D_KP1 (ciphered with the public key of KP1) stored in the cloud is converted into a document D_KP2 (decipherable with the private key of KP2) thanks to the multi-hop bidirectional transition key KT12. Figure 2 also shows how the same a document D_KP1 (ciphered with the public key of KP1) is converted into a document D_KP5 (decipherable with the private key of KP5) thanks to the single-hop unidirectional transition key KT15 obtained by the multi-hop bidirectional transition KT12, followed by the multi-hop bidirectional transition key KT23, followed by the single-hop unidirectional transition key KT34, followed by the multi-hop bidirectional transition key KT45.

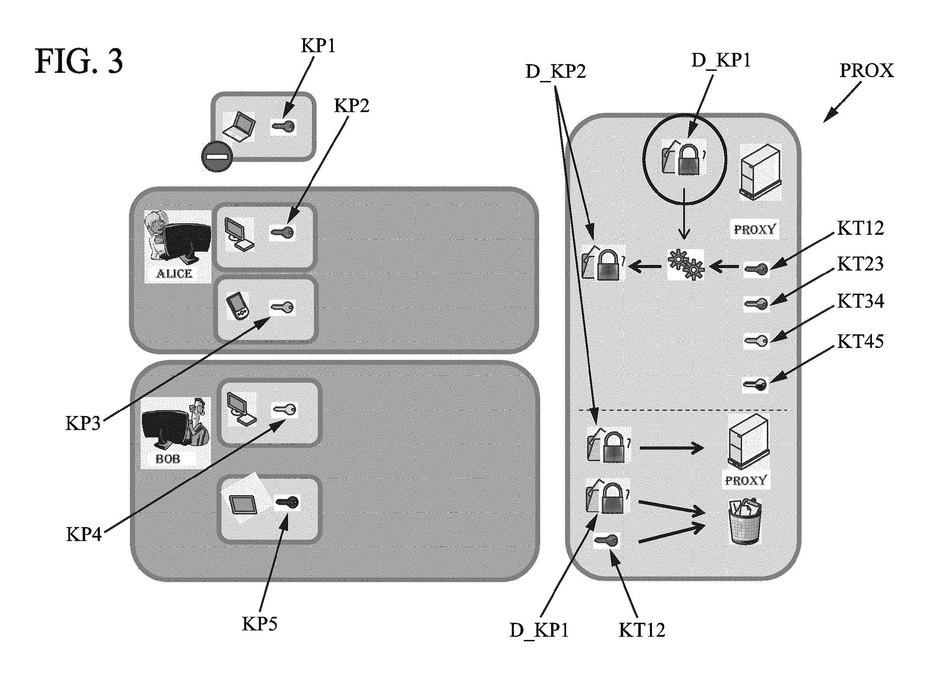

Figure 3 illustrate the loss of the laptop computer of Alice in the system according to Figure 1. Due to this loss, the key pair KP1 (stored in the laptop) is lost as well and it is no longer possible to directly decrypt the document D_KP1. The proxy PROX converts the document D_KP1 into a document D_KP2 (decipherable with the private key of KP2) thanks to the multi-hop bidirectional transition key KT12. The document D_KP1 as well as the transition key TK12 can then be deleted.

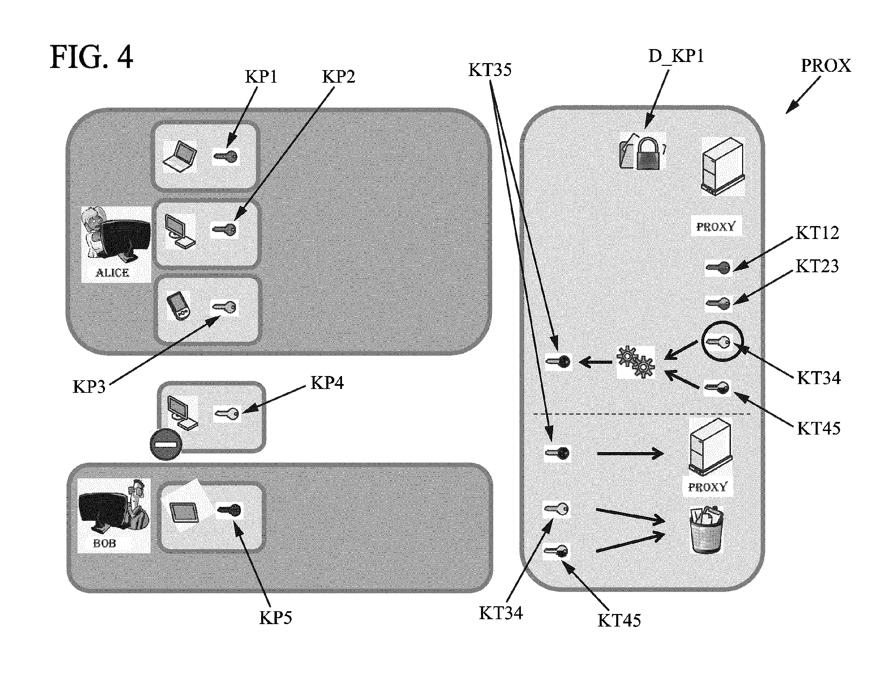

Figure 4 illustrate the loss of the desktop computer of Bob in the system according to Figure 1. Due to this loss, the key pair KP4 (stored in the desktop computer) is lost as well and the transition key KT34 becomes useless. The transition key KT34 is merged with the transition key KT45 in order to form a new transition key KT35, and the old transition keys KT34 and KT45 are deleted.

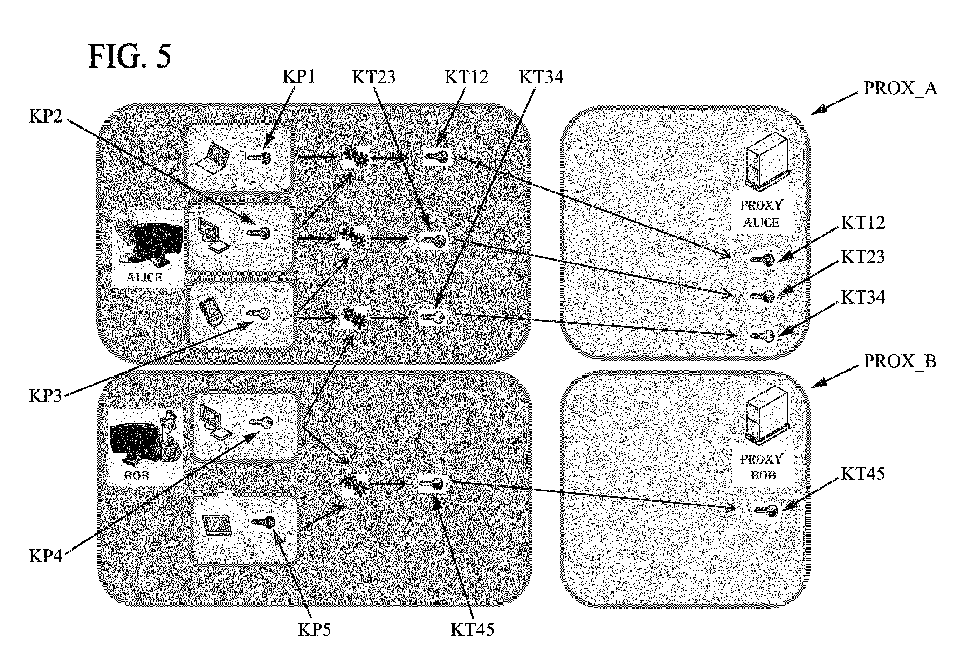

Figure 5 illustrates a system according to Figure 1 modified so as to rely on two different proxies PROX_A and PROX_B instead of a single one (PROX), wherein the transition keys for Alice are stored and managed by a proxy dedicated to Alice (PROX_A), and the transition keys for Bob are stored and managed by a proxy dedicated to Bob (PROX_B).

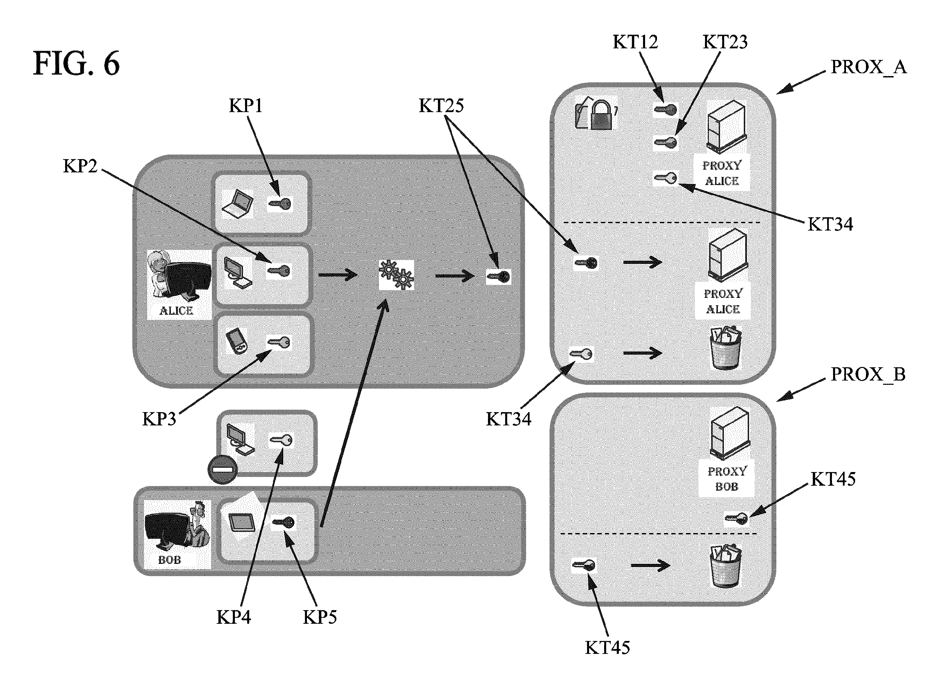

Figure 6 illustrate the loss of the desktop computer of Bob in the system according to Figure 5. Due to this loss, the key pair KP4 (stored in the desktop) is lost as well. A new unidirectional single-hop transition key KT25 (from key pair KP2 to key pair KP5) is created. Transition keys KT34 and KT45 are then deleted from PROX_A and PROX_B respectively. PROX_B no longer stores a transition key.

According to a possible embodiment, a system comprises electronic devices (for example smart phones, cell phones, portable computer, PCs, smart cards, security tokens, etc.) connectable to a network (for example a cloud, or simply a network comprising conventional servers, or a cellular network). The electronic devices are associated with respective key pairs. Each electronic device therefore has at least one key pair. According to a possible embodiment, there is a one to one relationship between a key pair and an electronic device. However, it is also possible, for example, to have several (and unique) key pairs in a same electronic device. This can be the case if a given user has several key pairs (for example a key pair for personal use and a key pair for professional use, or several professional key pairs each attached to different services), and stores several of his key pairs in the same device (for example in the SIM card of his smart phone).

Each key pair comprises a private key and a related public key.

The system is adapted to cipher data with a public key of a key pair of an electronic device of the system, to store thus ciphered data in the network and to share said ciphered data through the network with an electronic device of the system (the same electronic device or another one). For example, the system may enable a user of an electronic device of the system to cipher data stored on his electronic device (e.g. a smart phone), to store such ciphered data in a cloud, and then to later retrieve such ciphered data for himself into his electronic device, or to share it with another user's electronic device, or to transfer it to another electronic device belonging to himself.

The set of key pairs associated with said electronic devices of the system (i.e. the set comprising any key pair stored on any one of the electronic devices of the system) is partitioned into at least two subsets such that for each subset having more than one key pair there is a mutual trust between all key pairs of such subset. By definition, mutual trust between two key pairs means that any holder of any of the two key pairs accepts that any data ciphered with the public key of his key pair be decipherable by a private key of the other key pair. In a possible embodiment, the decryption first needs to involve a proper bidirectional transition key, to be applied to the ciphered data. In a possible trust model, each subset corresponds to a person, and contains all key pairs of such person. The person is accordingly assumed to trust herself whatever the key pair concerned (since all key pairs in question all belong to the same person). However, in another trust model, a same person may have several key pairs not necessarily trusting each other, for example a military officer working on top secret matter may have access to secret material that he should not be able to decrypt at home with his personal key pair. Conversely, there can be trust relationships between different persons, therefore in possible embodiments a given subset may contain key pairs belonging to different persons.

The system is arranged to define, for each key pair of each such subset, a bidirectional transition key between said key pair and another key pair of such subset. Accordingly, if N is an integer designating the number of key pairs in a subset, at least N-1 bidirectional transition keys are defined (there may also be more than N-1 bidirectional transition keys). Accordingly, bidirectional keys being multi-hop keys, a private key of any key pair of a subset can decipher data ciphered by a public key of any other key pair of the subset, by first using at least one and at most N-1 bidirectional transition keys. For example in a subset comprising key pairs KP1, KP2 and KP3, and associated with bidirectional transition keys KT12 and KT13, only KT12 is needed to enable the decryption of a document D_KP1 ciphered with the public key of KP1 by the private key of KP2. However, both KT12 and KT13 are needed to enable the decryption of a document D_KP2 ciphered with the public key of KP2 by the private key of KP3. It is in fact possible to compute less than N-1 transition keys, however this may cause deficiencies in the system, which deficiencies may lead the system for example to request from one of the devices to decipher (to the extent possible) and re-cipher stored data in order to overcome the deficiency.

The system is further arranged to define a unidirectional transition key between a key pair of a subset and a key pair of another subset. Accordingly, it is possible to share information between such key pairs in one direction (a key pair of a subset may trust a key pair of another subset without the converse being true). According to a possible embodiment, each subset corresponds to a person, and unidirectional transition keys are used between different persons.

In a possible embodiment, different key pairs of a subset are necessarily stored on different electronic devices. This embodiment is advantageous, because if any electronic device is lost, and if a key pair of the electronic device belonged to a subset, then any other device which stores another key pair belonging to the same subset can recover data ciphered with the public key of said key pair of the lost electronic device. In this context, if an electronic device comprises several key pairs, then only data ciphered with a public key of a key pair of the electronic device that belongs to a subset with at least two key pairs can be recovered. The expression "loss of the electronic device" may refer to the electronic device being destroyed, accidentally left behind, stolen, or having otherwise failed (e.g. hardware or software failure) or being disposed of (when replaced by newer equipment). It is typically not possible (or at least very difficult) to retrieve key material from the electronic device.

More particularly, each subset may correspond to a person, and each key pair of the subset may correspond to a different electronic device of the person (e.g. his cell phone, his tablet, his PC, his laptop). If the person loses his tablet, the ciphered contents (which are in the cloud) may accordingly be decipherable from another one of the electronic devices of that person. In such a scheme, unidirectional transition keys may correspond to unidirectional trust between two devices, each belonging to a different person.

In another embodiment, a same electronic device may comprise several key pairs belonging to a same subset. This may be advantageous as it may offer protection against accidental destruction of one of such key pairs in an electronic device without the electronic device itself being lost (e.g. if the user of an electronic device is given the possibility to delete key pairs and deletes one by mistake), without involving other electronic devices, as long as another key pair of the subset is already stored in the same electronic device. This may also help in dealing with key pair revocation (e.g. when a key pair has been compromised and needs to be revoked) or key pair renewal (a key pair typically has a validity period, for example two years, after which it needs to be replaced). But this does not necessarily protect against the loss of the electronic device, since data ciphered with a public key of a key pair of such electronic device cannot always be deciphered by another key pair. If at least one of the key pairs of the set is not stored in the lost electronic device, then a recovery for material ciphered with that key pair that was in the lost electronic device is possible.

According to a possible embodiment, the set composed of the electronic devices of the system is partitioned into at least two subsets of electronic devices such that for each subset having more than one electronic device there is a mutual trust between a key pair of any electronic device of such subset of electronic devices and a key pair of any other electronic device of such subset of electronic devices. The system is arranged to define, for each electronic device of each such subset of electronic devices, a bidirectional transition key between a key pair of said electronic device and a key pair of another electronic device of the subset, the system being further arranged to define a unidirectional transition key between a key pair of an electronic device of a subset of electronic devices and a key pair of an electronic device of another subset of electronic devices.

According to a possible embodiment, the system comprises a cryptographic proxy storing the transition keys. The system could also work without dedicated proxies, e.g. in carrying out transition key operations in another component (e.g. server) of the cloud or other type of network in which the system operates. The proxy is advantageous as it defines a security perimeter within which transition key operations may be performed more securely than in a general purpose component of a network.

According to another embodiment, the system comprises cryptographic proxies, each cryptographic proxy being associated with a subset of key pairs of the system and storing the transition keys defined for the key pairs of the subset. Each proxy may for example serve a certain number of holders of key pairs, for example in a corporate environment, two corporations could each operate their own (single) proxy for all of their respective employees, i.e. proxy X for all employees of company X and proxy Y for all employees of company Y.

According to a possible embodiment, a system is configured so as upon loss of a private key of a key pair of an electronic device of the system, a transition key being defined for the key pair, the system is arranged to convert any ciphered data stored in the network and ciphered with the public key of said key pair, the ciphered data being converted with the transition key into data decipherable by a private key of another key pair of an electronic device of the system.

The loss of the private key may occur through the loss of an electronic device storing the private key, or through unintentional destruction (or intentional revocation or renewal) of this private key within an electronic device that has not been lost.

According to a possible embodiment, upon loss of such private key (e.g. after having received a notification from a user indicating that the private key is lost), and after conversion of ciphered data, transition keys involving the lost key are destroyed (this may require re-computing other transition keys if needed).

According to a possible embodiment, a method is arranged to secure a system comprising electronic devices connectable to a network. Said electronic devices are associated with respective key pairs.

Each key pair comprises a private key and a related public key,

The system is adapted to cipher data with a public key of a key pair of an electronic device of the system, to store thus ciphered data in the network and to share said ciphered data through the network with an electronic device of the system. The method comprises:

/a/ defining a partition of the set of key pairs associated with said electronic devices of the system into at least two subsets such that, for each subset having more than one key pair, there be a mutual trust between all key pairs of such subset;

/b/ defining for each key pair of each such subset a bidirectional transition key between said key pair and another key pair of such subset;

/c/ defining a unidirectional transition key between a key pair of a subset and a key pair of another subset.

The method may be carried out by software components (which may be developed for example in C language, assembly language, Java, or any other suitable programming language) which may be run by processors of respective elements (electronic devices and proxies) of the system. Accordingly, electronic devices and/or proxies may comprise a processor associated with a memory storing the respective software component and possibly other components (such as a crypto-processor). Alternatively, electronic devices and/or proxies may comprise dedicated circuits, carrying out the method electronically (without a conventional processor, but for example with hardwired logic).

According to a possible embodiment, a computer program product is arranged to carry out a method as described above when executed by a processor.

According to a possible embodiment, a non transitory computer readable storage medium (such as a USB key, a memory chip embedded in an electronic device or proxy, a smart card chip, etc.) stores a computer program according to the previous paragraph.

More detailed possible embodiments will now be described.

The embodiments are based on the proxy re-encryption system proposed by Benoît Libert and Damien Vergnaud, in "Unidirectional chosen-ciphertext secure proxy re-encryption", in Ronald Cramer, editor, Public Key Cryptography, volume 4939 of Lecture Notes in Computer Science,pages 360-379. Springer, 2008.

The following unidirectional single-hop proxy re-encryption scheme is proposed:

GENERATION OF PUBLIC PARAMETERS Choose a prime p and two groups G and $G_t$ of prime order p such that there exists a bilinear pairing $e : G \times G \to G_T$. Let. $g,u,v$ be three generators of G and $S$ = (KEYCEN,SICN,VERIF) be a strongly unforgeable one-time signature scheme such that verification keys are in $Zp^*$ (see [1] for more details). The global parameters are $P = (p,G,G_T,e,g,u,v,S)$.

KEY GENERATION. On input the global parameters, each user is able to generate her own private key $x \xleftarrow{\$} \mathbb{Z}_p^*$ and the corresponding public, key $X = g^x$.

The re-encryption key between a user $i$. and a user $j$ is generated by using the private key $x_i$ of $i$ and the public key $X_j$ of $j$. Such key is computed as $R_{i \to j} = X_j^{1/x_i}$.

FIRST LEVEL ENCRYPTION. On input the public parameters, a message $m \in G_T$ and a public key $X_i$, this algorithm creates a first level ciphertext $C'$ as follows:

1. Run the key generation procedure of the strongly unforgeable one-time signature scheme $(ssk,svk) = S.KEYGEN$ () and denote $C_1 = svk$.

2. Pick $r,t \in \mathbb{Z}_p^*$.

3. Compute $C_2' = X_i^t$, $C_2'' = g^{1/t}$, $C_2''' = X_i^{rt}$, $C_3 = e(g,g)^r \cdot m$ and $C_4 = (u^{svk} \cdot v)^r$.

4. Run the signature of the strongly unforgeable one-time signature scheme $\sigma = S.\text{SIGN}(ssk, C_3\|C_4)$.

The first level ciphertext of the message $m$ is $C' = (C_1, C_2', C_2'', C_2''', C_3, C_4, \sigma)$.

SECOND LEVEL. ENCRYPTION. On input the public parameters, a message $m \in G_T$ and a public key $X_i$, this algorithm creates a second level ciphertext $C$ as follows:

1. Run the key generation procedure of the strongly unforgeable one-time signature scheme $(ssk, svk) = S.\text{KEYGEN}()$ and note $C_1 = svk$.

2. Pick $r \in \mathbb{Z}_p^*$.

3. Compute $C_2 = X_i^r$, $C_3 = e(g,g)^r \cdot m$ and $C_4 = (u^{svk} \cdot v)^r$.

4. Run the signature of the strongly unforgeable on-time signature scheme $\sigma = S.\text{SIGN}(ssk, C_3\|C_4)$. The second level ciphertext of the message $m$ is $C = (C_1, C_2, C_3, C_4, \sigma)$.

UNIDIRECTIONAL RE-ENCRYPTION. On input the public parameters, a second level elphertext $C$ and a re-encryption key $R_{i \to j}$ from $i$ to $j$. The re-encryption algorithm, proceeds as follows:

1. Validity of the second level ciphertext $C_i$ intended to $i$: check if $e(C_2, u^{C1} \cdot v) = e(X_i, C_4)$ and if $S.\text{VERIF}(C_1, \sigma, C_3\|C_4) = 1$.

2. Pick $t \in \mathbb{Z}_p^*$.

3. Compute $C_2' = X_i^t$, $C_2'' = R_{i \to j}^{1/t}$ and $C_2''' = C_2^t$.

The re-encryption of the second level ciphertexts is $C$ is $C' = (C_1, C_2', C_2'', C_2''', C_3, C_4, \sigma)$.

FIRST LEVEL DECRYPTION. On input the public parameters, a first level elphertext $C'$ and a private key $x_i$, the message $m$ can be recovered as follows:

1. Validity of the ciphertext intended to $i$: check if $e(C_2', C_2'') = e(X_i, g)$, if $e(C_2''', u^{C_1} \cdot v) =$

$$e(C_2', C_4)$$

and if $S.\text{VERIF}(C_1, \sigma, C_3\|C_4) = 1$.

2. Compute $m = C_3 / e(C_2'', C_2''')^{1/x_i}$.

SECOND LEVEL DECRYPTION. On input the public parameter, a second level ciphertext $C$ and a private key $x_i$, the message m can be recovered as follows:

1. Validity of the second level ciphertext $C_i$ intended to i: cheek if $e(C_2, u^{C_1} \cdot v) = e(X_i, C_4)$ and if $S.\text{VERIF}(C_1, \sigma, C_3\|C_4) = 1$.

2. Compute $m = C_3/e(C_2,g)^{1/x_i}$.

The following bidirectional multi-hop proxy re-encryption scheme is proposed:

GENERATION OF PUBLIC PARAMETERS Choose a prime p and two groups G and $G_t$ of prime order p such that there exists a bilinear pairing e : G×G → $G_T$. Let $g,u,v$ be three generators of G and $S$ = (KEYGEN,SIGN,VERIF) be a strongly unforgeable one-time signature scheme such that verification keys are in $\mathbb{Z}_p^*$
The global parameters are $P = (p,G,G_T,e,g,u,v,S)$.

KEY GENERATION. On input the global parameters, each user is able to generate her own private key $x \xleftarrow{\$} \mathbb{Z}_p^*$ and the corresponding public key $X = g^x$.

The re-encryption key between a user $i$ and a user $j$ is generated by using both private keys $x_i$ of $i$ and $x_j$ of $j$. A such key is computed as $R_{i \leftrightarrow j} = x_j/x_i$. The re-encryption key between $i$ and $j$ is also $R_{i \leftrightarrow j}$.

$R_{i \leftrightarrow j}$ will denote $x_i/x_j$, the inverse of it will be denoted $R_{j \leftrightarrow i}$ and is also computable from the first

SECOND LEVEL ENCRYPTION.

In the case of a bidirectional multi-hop proxy re-encryption, there is one single level of ciphertext. But, regarding the above unidirectional single-hop scheme, we keep the terminology of "second level" ciphertext.

On input the public parameters, a message $m \in G_T$ and a public key $X_i$, this algorithm creates a second level ciphertexts $C_i$ as follows:

1. Run the key generation algorithm of the strongly unforgeable one-time signature scheme $(ssk,svk)$ = S.KEYGEN () and note $C_1 = svk$.

2. Pick $r \in \mathbb{Z}_p^*$.

3. Compute $C_{i,2} = X_i^r$, $C_3 = e(g,g)^r \cdot m$ and $C_4 = (u^{svk} \cdot v)^r$.

4. Run the signature of the strongly unforgeable one-time signature scheme σ = S.SIGN$(ssk,C_3\|C_4)$. The second level ciphertext of the message m is $C_i = (C_1,C_{i,2},C_3,C_4,σ)$.

BIDIRECTIONAL RE-ENCRYPTION. On input the public parameters, a second level ciphertext $C_i$ and a re-encryption key $R_{i \leftrightarrow j}$ from $i$ to $j$. The re-encryption algorithm proceeds as follows:

1. Validity of the second level ciphertext $C_i$ intended to i: check if $e(C_{i,2},u^{C_1} \cdot v) = e(X_i,C_4)$ and if S.VERIF$(C_1,σ, C_3\|C_4)$ = 1.

2. Compute $C_{j,2} = C_{i,2}^{R_{i \leftrightarrow j}}$,

The re-encryption of the second level ciphertext is $C_j$ is $C_j = (C_1,C_{j,2},C_3,C_4,σ)$.

SECOND LEVEL DECRYPTION. On input the public parameters, a second level ciphertext $C_i$ and a private key $x_i$, the message m can be recovered as follows:

1. Validity of the second level ciphertext $C_i$ intended to i: check if $e(C_{i,2},u^{C_1} \cdot v) = e(X_i,C_4)$ and if S.VERIF$(C_1,σ, C_3\|C_4)$ = 1.
2. Compute $m = C_3/e(C_{i,2},g)^{1/x_i}$.

The key point is that the level 2 ciphertext of this scheme is exactly the same as the level 2 ciphertext of the unidirectional single-hop scheme described above.

The above can be applied as follows to distributed secure storage with management of lost device.

Both schemes can be used to construct a distributed secure storage system based on proxy re-encryption. One has to consider that there is a mutual trust between key pairs of a given subset. In the following examples, each electronic device stores a unique key pair (therefore key pairs and corresponding electronic devices are interchangeable in the sense that they correspond to a same logical entity). In the following, each subset is formed by all electronic devices of a given user (of course, as discussed earlier, other kinds of subsets could be defined, and the same mathematical method described below could be used).

In the following examples, we can use a bidirectional re-encryption between those devices that belong to a same user, whereas we do not want to have this kind of trust between devices of different users. A first user Alice (A) may want to share her data with a second user Bob (B), but Bob may want to not share his data with Alice, so that we use in this case a unidirectional type scheme.

An example of such a distributed secure storage system between two users is showed below, in which A has devices A1, A2, A3 and A4 and a B which has devices B1, B2 and B3.

Keys generation

A computes the minimum of bidirectional re-encryption keys between her devices such that it allows the proxy to compute all bidirectional re-encryption keys from any A's device to any other A's device, for example: $R_{A1\leftrightarrow A2}$, $R_{A1\leftrightarrow A3}$ and $R_{A2\leftrightarrow A4}$.

In practice, each time a user adds a new device to the cloud, she may compute a bidirectional re-encryption between her new device and one of her already existing devices. The user B do the same for her devices. All these bidirectional re-encryption keys are given to the proxy. To finish, A computes at least one unidirectional re-encryption key from one of her devices to one of B's devices, for example $R_{A3\rightarrow B2}$ and gives it to the proxy.

*Remark* Regarding key generation

- With such configuration, there are enough re-encryption keys for A's devices. For example with $R_{A1\leftrightarrow A2}$ and $R_{A1\leftrightarrow A3}$, one can compute $R_{A2\leftrightarrow A3} = R_{A1\leftrightarrow A3}/R_{A1\leftrightarrow A2}$.

- Similarly, we can easily compute all re-encryptions keys from any A's devices to any B's devices. Indeed

$$R_{A_1\leftrightarrow B_2} = R_{A_3\leftrightarrow B_1}^{R_{A_1\leftrightarrow A_3}\cdot R_{B_1\leftrightarrow B_2}}$$

Distributed secure storage

Suppose A wants to store a message m in her cloud, so that B can access it. She selects one of her devices, *e.g.* $A_3$, and encrypts the data m under the public key of this selected device (with the second level encryption algorithm), she obtains $C_{A_3} = Encrypt_2(m, pk_{A_3})$ and sends it to the cloud. A can recovers her data from any of her devices as follows:

- If she wants to recover it from her device $A_3$, the proxy sends her $C_{A_3}$ and, as it is a ciphertext intended to the public key of $A_3$, A can easily decrypt it with the device $A_3$.
- If she wants to recover it from another device, *e.g.* $A_1$, the proxy can obtain from all available bidirectional re-encryption keys, the re-encryption key from $A_3$ to $A_1$. With this latter, the proxy can next compute the ciphertext $C_{A_1} = Bidirectícmal.ReEncrypt(C_{A_3}, R_{A_3\leftrightarrow A_1})$ intended to $A_1$. $A_1$ can finally decrypt it, using the level 2 decryption procedure of the bidirectional multi-hop type scheme.

Suppose now that *B* wants to recover the message *m*. As *A* delegates to *B* her decryption rights, *B* mays recover her data from any of her devices. Indeed, let $i \in [1,4]$. As already explained, the proxy can compute the re-encryption key from $A_3$ to $B_i$ (related to the unidirectional single-hop scheme): $R_{A_3\rightarrow B_i}$. It can also re-encrypts $C_{A_3}$ into a level 1 ciphertext

$$C'_{B_i} = Unidirectional.ReEncrypt(C_{A_3}, R_{A_3\rightarrow B_i})$$

intended to $B_i$ and related to the unidirectional single-hop proxy re-encryption scheme.

Lost devices may be managed according to the following (different situations are considered).

- *A* has still at least one device: the proxy re-encrypts all ciphertexts intended to the lost device, say $A_2$, into ciphertexts intended to a remaining device of *A*. This is possible as the proxy can compute all re-encryptions keys between A's devices. Then it stores all new ciphertexts and deletes ciphertexts intended for this lost device. Moreover, to prevent the lost device to access to data via a re-encryption, the proxy also deletes all unidirectional and bidirectional re-encryption keys involving the key of the lost device. Before doing this, the proxy has to be careful since it is necessary for it to keep a set of minimum re-encryption keys to recover all re-encryption keys between remaining devices. For example if the only link to compute the re-encryption key between $A_1$ and $A_3$ is $R_{A_1 \leftrightarrow A_2}$ and $R_{A_2 \leftrightarrow A_3}$, then the proxy has first to compute $R_{A_1 \leftrightarrow A_3}$ and to store it before deleting $R_{A_1 \leftrightarrow A_2}$ and $R_{A_2 \leftrightarrow A_3}$.

- A has no more device: the proxy does as described previously, except that the target device is one device of $B$. Next, the proxy can delete all re-encryption keys involving the lost device, as they are not useful anymore.

*Remark* . If the lost device of *A* is his only one, and if *A* has no delegates, then it seems that there is no solution. It is thus important to motivate users to have more than one device in such system.

The advantage of this solution is that it is not necessary to ask the user to use one of his device in order to decrypt a ciphertext, so as to encrypt it for another key. Moreover, this solution also manages the addition of new devices into the system. For this purpose, it is simply necessary to give to the proxy the new related re-encryption keys.

According to a possible embodiment, each user may be provided with his own proxy.

In the case each user has his own personal proxy and does not necessarily trust the other proxies, then some modifications are proposed in the above construction. The first modification is in the re-encryption key management. In fact, the bidirectional re-encryption keys of one user (and the unidirectional re-encryption keys from this user to other users) are only given to her proxy

The storage of data is not modified: when a user *A* wants to store a data (and want to share it with a user *B*), she encrypts it under the public key of one of her device and stores the obtained ciphertext in her cloud.

The main difference is when *B* wants to recover such stored data. Either all the re-encryption keys are generated and stored by the first proxy and there is no more problem. In case the re-encryption key from the key used to encrypt the cipher to the one related to the device *B* which is used to obtain the data does not exist, the proxy first obtains a ciphertext intended to one device of *B* (using the keys it has stored and the bidirectional multi-hop type scheme). In a second step, the proxy of *A* sends the result to the proxy of *B* which can next use the appropriate key and the unidirectional single-hop type scheme to obtain a ciphertext for the requesting device of *B*.

In fact, our above scheme is not complete since in the above case, the ciphertext which is send from proxy *A* to proxy *B* corresponds to a level 1 ciphertext: it seems not possible to be re-encrypted again for another device of *B*. We need thus to add the following procedure which permits such re-encryption.

BIDIRECTIONAL RE-ENCRYPTION'. On input the public parameters, a first level ciphertext $C_i'$ and a re-encryption key $R_{i \leftrightarrow j}$ from *i* to *j*. The re-encryption algorithm proceeds as follows:

1. Validity of the ciphertext intended to i: check if $e(C_{i,2}', C_{i,2}'') = e(X_i, g)$, if $e(C_{i,2}''', u^{C_1} \cdot v) =$ and if *S.VERIF* $(C_1, \sigma, C_3 \| C_4) = 1$.

2. Compute $C_{j,2}' = C_{i,2}'^{R_{i \leftrightarrow j}}$, $C_{j,2}'' = C_{i,2}''^{R_{i \leftrightarrow j}}$ and $C_{j,2}''' = C_{i,2}'''^{R_{i \leftrightarrow j}}$.

The re-encryption of the first level ciphertext is $C_j'$ is $C_j' = (C_1, C_{j,2}', C_{j,2}'', C_{j,2}''', C_3, C_4, \sigma)$. .

*Lost device.* In case one user loose one device, we can apply the above technique, except that some new unidirectional re-encryptions keys have to be send to some proxies. For example, if *A*'s proxy has the unidirectional re-encryption key from $A_2$ to $B_3$ and *B* lost her device $B_3$, then *A*'s proxy has to delete the re-encryption key from $A_2$ to $B_3$. *B* will not be able to recover data before *A* will give a new unidirectional re-encryption key to her proxy (to prevent that case, *A* can compute some unidirectional re-encryption keys for different devices of B and give it to her proxy before the lost of a device).

**Claims**

1.  A system comprising electronic devices connectable to a network, said electronic devices being associated with respective key pairs,
    each key pair comprising a private key and a related public key,

the system being adapted to cipher data with a public key of a key pair of an electronic device of the system, to store thus ciphered data in the network and to share said ciphered data through the network with an electronic device of the system,

the set of key pairs associated with said electronic devices of the system being partitioned into at least two subsets such that for each subset having more than one key pair there is a mutual trust between all key pairs of such subset, the system being arranged to define, for each key pair of each such subset, a bidirectional transition key between said key pair and another key pair of such subset,

the system being further arranged to define a unidirectional transition key between a key pair of a subset and a key pair of another subset.

2. The system according to claim 1, wherein the system comprises a cryptographic proxy storing the transition keys.

3. The system according to claim 1, wherein the system comprises cryptographic proxies, each cryptographic proxy being associated with a subset of key pairs of the system and storing the transition keys defined for the key pairs of the subset.

4. The system according to claim 1, wherein, upon loss of a private key of a key pair of an electronic device of the system, a transition key being defined for the key pair, the system is arranged to convert any ciphered data stored in the network and ciphered with the public key of said key pair, the ciphered data being converted with the transition key into data decipherable by a private key of another key pair of an electronic device of the system.

5. A method for securing a system comprising electronic devices connectable to a network, wherein said electronic devices are associated with respective key pairs,

each key pair comprising a private key and a related public key,

the system being adapted to cipher data with a public key of a key pair of an electronic device of the system, to store thus ciphered data in the network and to share said ciphered data through the network with an electronic device of the system, the method comprising:

/a/ defining a partition of the set of key pairs associated with said electronic devices of the system into at least two subsets such that, for each subset having more than one key pair, there be a mutual trust between all key pairs of such subset;

/b/ defining for each key pair of each such subset a bidirectional transition key between said key pair and another key pair of such subset;

/c/ defining a unidirectional transition key between a key pair of a subset and a key pair of another subset.

6. The method according to claim 5, wherein the system comprises a cryptographic proxy, the method comprising storing the transition keys in the cryptographic proxy.

7. The method according to claim 5, wherein the system comprises cryptographic proxies, each cryptographic proxy being associated with a set of electronic devices of the system, the method comprising storing the transition keys defined for the electronic devices of the set in the associated cryptographic proxy.

8. The method according to claim 5, wherein, upon loss of a private key of a key pair of an electronic device of the system, a transition key being defined for the key pair, the method comprises converting any ciphered data stored in the network and ciphered with the public key of said key pair, the ciphered data being converted with the transition key into data decipherable by a private key of another key pair of an electronic device of the system.

9. A computer program product arranged to carry out a method according to claim 5 when executed by a processor.

10. A non transitory computer readable storage medium storing a computer program according to claim 9.

FIG. 1

EP 2 680 486 A1

FIG. 2

# FIG. 3

KP1

KP2

ALICE

KP3

BOB

KP4

KP5

D_KP2

D_KP1

PROX

PROXY

KT12

KT23

KT34

KT45

PROXY

D_KP1

KT12

EP 2 680 486 A1

14

FIG. 4

# FIG. 5

EP 2 680 486 A1

FIG. 6

**Europäisches Patentamt**
**European Patent Office**
**Office européen des brevets**

# EUROPEAN SEARCH REPORT

Application Number

EP 12 30 5788

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | XIAOHUI LIANG ET AL: "Attribute Based Proxy Re-encryption with Delegating Capabilities", ACM, 2 PENN PLAZA, SUITE 701 - NEW YORK USA, 12 March 2009 (2009-03-12), XP040465600, Sydney * the whole document * | 1-10 | INV. H04L9/08 H04L9/30 |
| X | QIANG TANG ET AL: "Inter-domain Identity-Based Proxy Re-encryption", 14 December 2008 (2008-12-14), INFORMATION SECURITY AND CRYPTOLOGY, SPRINGER BERLIN HEIDELBERG, BERLIN, HEIDELBERG, PAGE(S) 332 - 347, XP019117004, ISBN: 978-3-642-01439-0 * the whole document * | 1-10 | |
| X | CHUNBO MA ET AL: "Group-Based Proxy Re-encryption Scheme", 16 September 2009 (2009-09-16), EMERGING INTELLIGENT COMPUTING TECHNOLOGY AND APPLICATIONS, SPRINGER BERLIN HEIDELBERG, BERLIN, HEIDELBERG, PAGE(S) 1025 - 1034, XP019140602, ISBN: 978-3-642-04069-6 * the whole document * | 1-10 | TECHNICAL FIELDS SEARCHED (IPC) H04L G06F |

The present search report has been drawn up for all claims

| Place of search | Date of completion of the search | Examiner |
|---|---|---|
| Munich | 22 October 2012 | Mariggis, Athanasios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **GIUSEPPE ATENIESE ; KEVIN FU ; MATTHEW GREEN ; SUSAN HOHENBERGER.** Improved Proxy Re-encryption Schemes with Applications to Secure Distributed Storage. *ACM Transactions on Information and System Security,* February 2006, vol. 9 (1), 1-30

- Unidirectional chosen-ciphertext secure proxy re-encryption. **BENOÎT LIBERT ; DAMIEN VERGNAUD.** Public Key Cryptography, volume 4939 of Lecture Notes in Computer Science. Springer, 2008, vol. 4939, 360-379